# EUROPEAN PATENT APPLICATION

(11) **EP 4 837 415 A1**
(43) Date of publication of application: **11.11.2026**
(21) Application number: 26173853.8
(22) Date of filing: 22.04.2026
(51) Int. Cl.: A01M 7/00

(54) **ACTIVE BOOM HEIGHT CONTROL SYSTEM FOR AN AGRICULTURAL SPRAYER USING CHASSIS MOVEMENT DETECTION**

(30) Priority: 07.05.2025 GB 202506920
(71) Applicant: AGCO International GmbH, 8212 Neuhausen am Rheinfall (CH)
(72) Inventor: Kelber, Christian Roberto, 87616 Marktoberdorf (DE)
(74) Representative: AGCO Intellectual Property Department

(57) **Abstract**

A mechanism for adjusting the height of a boom of an agricultural vehicle system with a sprayer implement. Movement data of a chassis of a drive vehicle of the agricultural vehicle system is used by a controller to control the heigh of the boom. The movement data indicates movement in a non-travel direction of the agricultural vehicle system, such as a vertical movement.

## Description

### CROSS-REFERENCE TO RELATED APPLICATIONS

### FIELD

Embodiments of the present disclosure relate to the field of agriculture, and in particular to sprayers.

### BACKGROUND

With ever-increasing population numbers and an ongoing interest in more environmentally friendly farming practices, there is a desire to improve agricultural practices.

Agricultural sprayers are used in the application of various materials to field crops. Such systems apply various chemicals in the form of a fluidic spray for the purposes of crop protection, e.g. through the use of appropriate pesticides or herbicides, or for the purposes of promoting plant growth, e.g. through use of liquid plant fertilizer or crop desiccants (e.g., for pre-harvesting desiccation). Agricultural sprayers may be provided as self-propelled sprayers, or as systems to be mounted to an agricultural tractor, e.g. as a towed or hitch-mounted implement.

Typically, an agricultural sprayer comprises a boom upon which one or more fluid application devices (commonly spray nozzles) are mounted. These fluid application devices are distributed in a spaced relationship along the length of the boom, and are fluidically connected to a fluid tank, e.g., by one or more pipes, ducts, valves, pump and/or other fluidic connectors. Fluid passes from the fluid tank and is applied by the fluid application device(s).

As the sprayer is moved over a ground surface, it will naturally be subject to various forces, e.g., due to uneven ground and/or vehicle accelerations. This can lead to undesirable jostling or sudden movement of the boom, which in turn leads to increased risk of boom damage. Moreover, any sudden movement may affect a distribution of fluid applied by the fluid application device(s) mounted on the boom, e.g., affect a direction of fluid application and/or a proximity to a crop/ground to which fluid is to be applied.

There is an ongoing desire to reduce or mitigate sudden movement of the boom, reducing a risk of boom damage.

### BRIEF SUMMARY

According to examples in accordance with this disclosure, there is provided a agricultural vehicle system comprising: a drive vehicle having a chassis for providing structural support to the drive vehicle; a sprayer implement configured to connect to the drive vehicle, the sprayer implement comprising: a support frame; one or more booms supported on the support frame, wherein each boom carries one or more fluid application devices; and for each boom, at least one height control mechanism for controlling a height of the respective boom with respect to the support frame; and a control system comprising: one or more sensors for generating movement data indicating a detected movement of the chassis of the drive vehicle in at least one detection direction; and a controller configured to control, for each boom, the operation of the at least one height control mechanism to actively control a height of the respective boom with respect to the support frame responsive to the movement data, wherein each detection direction makes a non-zero angle with respect to a travel direction of the drive vehicle.

*The present disclosure proposes an agricultural vehicle system in which one or more booms of a sprayer implement are actively controlled to account for (e.g., reduce the influence of) a movement of the drive vehicle, which is indicative of ground contours or obstacles encountered by the drive vehicle that are likely to propagate to the boom(s). This may, for instance, be useful for actively adjusting boom height to reduce a risk of jostling or other sudden movement of the boom(s). This is particularly advantageous when traversing uneven terrain or encountering obstacles, as it helps maintain consistent boom height and spray coverage while reducing the risk of boom damage or uneven application of agricultural material.*

*By using movement data indicative of a movement of the drive vehicle , the proposed mechanism is able to anticipate and proactively adjust boom height to anticipate and subsequently compensate for upcoming terrain changes or obstacles before they directly impact the (boom(s) of the) sprayer implement. This approach allows for smoother, more responsive boom control, e.g., compared to systems that only react after the sprayer implement encounters changes in terrain or obstacles or only react to an immediate terrain beneath the sprayer implement. This agricultural vehicle system enables active control of boom height based on detected movements of the drive vehicle chassis. By anticipating and compensating for terrain changes before they directly impact the sprayer implement, the system provides smoother and more responsive boom control. This proactive approach helps maintain consistent boom height and spray coverage while reducing mechanical stress on boom structures, potentially extending equipment lifespan and improving application accuracy.*

In some examples, the controller is configured to control, for each boom, the operation of the at least one height control mechanism to control a height of the respective boom, with respect to the support frame, to at least partially compensate for the detected movement of the chassis of the drive vehicle indicated in the movement data.

*By adjusting boom height to compensate or counteract movements of the chassis, the proposed approach is able to reduce mechanical stress and potential damage to the boom structure that could otherwise occur from sudden jolts or impacts.*

In some examples, each hydraulic height control mechanism is configured to control a distance between the respective boom and the support frame. *This configuration allows for precise and independent control of each boom's height relative to the support frame.*

In some examples, each detection direction is perpendicular to a travel direction of the drive vehicle. *By focusing on movements perpendicular to the travel direction, this feature allows the system to more effectively detect and respond to side-to-side motions and vertical displacements of the drive vehicle. This improves the ability to maintain boom stability and level positioning, particularly when traversing slopes or uneven terrain.*

In some examples, the at least one detection direction comprises a direction perpendicular to a plane in which the chassis of the drive vehicle lies. *Detecting movement perpendicular to the chassis plane enables the movement data to capture vertical displacements and pitch changes of the drive vehicle. This information is useful for anticipating and compensating for terrain changes that could affect boom height.*

In some examples, the one or more booms comprises a plurality of booms. *The ability to adjust individual booms using the height control mechanism for each boom enables the system to better adapt to uneven terrain or localized obstacles, improving overall spray coverage and reducing the risk of boom damage. In particular, the ability to adjust individual boom sections facilitates compensation for a roll of the drive vehicle.*

In some examples, each sensor of the control system comprises an accelerometer and/or inertia sensor.

In some examples, the control system further comprises a remote sensing system configured to generate spatial data representing an environment ahead of the one or more booms of the sprayer implement; and the controller of the control system is configured to control, for each boom, the operation of the at least one hydraulic height control mechanism to actively control a height of the respective boom with respect to the support frame further responsive to the spatial data.

*In this way, the agricultural vehicle is able to anticipate and proactively adjust boom height for upcoming terrain changes or obstacles. This predictive capability allows for smoother boom control and thereby reduced mechanical stress on the boom structure.*

In some examples, the remote sensing system comprises a LIDAR sensor.

In some examples, the controller of the control system is configured to: process the spatial data to predict a future movement of the sprayer implement in at least one implement movement direction; and control, for each boom, the operation of the at least one hydraulic height control mechanism to actively compensate for at least part of the predicted future movement of the sprayer implement in the at least one implement movement direction.

*This predictive control approach allows the system to anticipate and compensate for upcoming terrain changes before they directly impact the sprayer implement, thereby facilitating the performance of accurate predictive boom height compensation, e.g., for a smoother operation and reduced mechanical stress on components.*

In some examples, the at least one implement movement direction makes a non-zero angle with respect to a travel direction of the drive vehicle.

In some examples, the controller of the control system is configured to: process the spatial data to predict a future movement of each boom of the sprayer implement in at least one boom movement direction; and control, for each boom, the operation of the at least one hydraulic height control mechanism to actively compensate for at least part of the predicted future movement of each boom in the at least one boom movement direction.

By predicting and compensating for the individual movements of each boom, this feature allows for more precise and localized height control. This granular approach to boom management may lead to improved spray consistency across the entire boom width, particularly when operating on uneven or variable terrain. The ability to anticipate and mitigate boom-specific movements could also reduce wear and tear on individual boom sections.

In some examples, the one or more sensors are positioned on the chassis. *Positioning sensors on the drive vehicle's chassis provides a stable and centralized mounting location for movement detection. This placement allows for more accurate capture of overall vehicle motion (e.g., including factors like pitch, roll, and yaw).*

In some examples, the drive vehicle comprises: two or more sets of one or more wheels, where each wheel in a same set of one or more wheels lies in a same axis and each wheel in a different set of one or more wheels lies in a different axis; a steering mechanism configured to: steer a direction of each wheel of the two or more sets of one or more wheels; and during a first mode of operation and responsive to a steering instruction to perform a tracking movement, steer each wheel of the two or more sets of one or more wheels to have a same orientation to thereby substantially maintain a yaw of the agricultural vehicle system.

*In other words, the drive vehicle may be equipped with multiple sets of one or more wheels (i.e., wheel sets), where each wheel set is aligned along a different axis. The steering mechanism is designed to control the direction of all wheel sets independently, i.e., perform multi-wheel steering. The first mode of operation enables a tracking movement, in which the steering mechanism aligns all wheels to the same orientation. This synchronized wheel alignment helps maintain the yaw (rotational movement around the vertical axis) of the entire agricultural vehicle system, including both the drive vehicle and the attached sprayer implement, thereby keeping the boom orientation steady relative to a forward direction of travel. This reduces stress on (boom(s) of the) the sprayer.*

*This steering capability complements the active boom control system previously described. While the boom control system adjusts for (vertical) movements and*/*or anticipated terrain changes, this steering mechanism helps maintain horizontal stability and precise directional control. Together, they provide a stable and reliable agricultural vehicle system.*

Other technical features may be readily apparent to one skilled in the art from the following figures, descriptions, and claims.

Within the scope of this application, it should be understood that the various aspects, embodiments, examples and alternatives set out herein, and individual features thereof may be taken independently or in any possible and compatible combination. Where features are described with reference to a single aspect or embodiment, it should be understood that such features are applicable to all aspects and embodiments unless otherwise stated or where such features are incompatible.

### BRIEF DESCRIPTION OF THE DRAWINGS

One or more embodiments of the disclosure will now be described, by way of example only, with reference to the accompanying drawings, in which:
FIG. 1 illustrates an agricultural vehicle system;
FIG. 2 illustrates a portion of an agricultural vehicle system;
FIG. 3 illustrates a control system;
FIG. 4 illustrates a proposed agricultural vehicle system; and
FIG. 5 illustrates remote sensors for a remote sensing arrangement.

### DETAILED DESCRIPTION

It should be understood that the detailed description and specific examples, while indicating exemplary embodiments of the apparatus, systems and methods, are intended for purposes of illustration only and are not intended to limit the scope of the disclosure. These and other features, aspects, and advantages of the apparatus, systems and methods of the present disclosure will become better understood from the following description, appended claims, and accompanying drawings. It should be understood that the Figures are merely schematic and are not drawn to scale. It should also be understood that the same reference numerals are used throughout the Figures to indicate the same or similar parts.

The following description provides specific details of embodiments. However, a person of ordinary skill in the art will understand that the embodiments of the disclosure may be practiced without employing many such specific details. Indeed, the embodiments of the disclosure may be practiced in conjunction with conventional techniques employed in the industry. In addition, the description provided below does not include all the elements that form a complete structure or assembly. Only those process acts and structures necessary to understand the embodiments of the disclosure are described in detail below. Additional conventional acts and structures may be used.

As used herein, the terms "comprising," "including," "containing," "characterized by," and grammatical equivalents thereof are inclusive or open-ended terms that do not exclude additional, unrecited elements or method steps, but also include the more restrictive terms "consisting of" and "consisting essentially of" and grammatical equivalents thereof.

As used herein, the singular forms following "a," "an," and "the" are intended to include the plural forms as well, unless the context clearly indicates otherwise.

As used herein, the term "may" with respect to a material, structure, feature, or method act indicates that such is contemplated for use in implementation of an embodiment of the disclosure, and such term is used in preference to the more restrictive term "is" so as to avoid any implication that other compatible materials, structures, features, and methods usable in combination therewith should or must be excluded.

As used herein, the term "configured" refers to a size, shape, material composition, and arrangement of one or more of at least one structure and at least one apparatus facilitating operation of one or more of the structure and the apparatus in a predetermined way.

As used herein, any relational term, such as "first," "second," "top," "bottom," "upper," "lower," "above," "beneath," "side," "outer," "inner," etc., is used for clarity and convenience in understanding the disclosure and accompanying drawings, and does not connote or depend on any specific preference or order, except where the context clearly indicates otherwise. For example, these terms may refer to an orientation of elements as illustrated in the drawings. Additionally, these terms may refer to an orientation of elements of the disclosure when utilized in a conventional manner.

As used herein, the term "substantially" in reference to a given parameter, property, or condition means and includes to a degree that one skilled in the art would understand that the given parameter, property, or condition is met with a small degree of variance, such as within acceptable manufacturing tolerances. By way of example, depending on the particular parameter, property, or condition that is substantially met, the parameter, property, or condition may be at least 90.0% met, at least 95.0% met, at least 99.0% met, or even at least 99.9% met.

As used herein, the term "about" used in reference to a given parameter is inclusive of the stated value and has the meaning dictated by the context (e.g., it includes the degree of error associated with measurement of the given parameter, as well as variations resulting from manufacturing tolerances, etc.).

As used herein, the term "and/or" includes any and all combinations of one or more of the associated listed items.

There is herein proposed mechanism for adjusting the height of a boom of an agricultural vehicle system with a sprayer implement. Movement data of a chassis of a drive vehicle of the agricultural vehicle system is used by a controller to control the heigh of the boom. The movement data indicates movement in a non-travel direction of the agricultural vehicle system, such as a vertical movement.

This disclosure relates to a mechanism for adjusting and/or regulating the height of a boom of a sprayer implement. The sprayer implement is connectable (e.g., removably or fixedly) to a drive vehicle. Movement data of a chassis of the drive vehicle is used to control a height control mechanism for adjusting the height of the boom of the sprayer implement.

For the avoidance of doubt, it is noted that the drive vehicle and the sprayer implement may be integrally connected, e.g., form a self-propelled sprayer. Alternatively, the drive vehicle and the sprayer implement may be removably connectable, e.g., in the form of a tractor (or other vehicle) and towed sprayer combination.

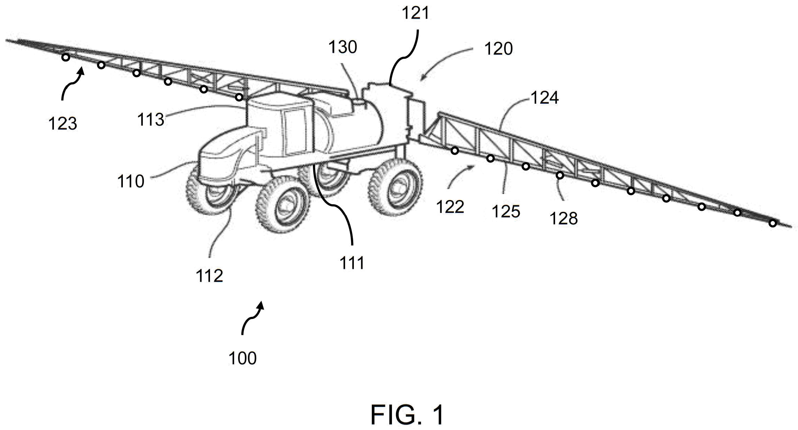

FIG. 1 illustrates an agricultural vehicle system 100 for the sake of contextual understanding. The agricultural vehicle system 100 comprises a drive vehicle 110 and a sprayer implement 120.

In the illustrated example, the drive vehicle 110 and the sprayer implement 120 are integrally formed, i.e., to define a self-propelled sprayer. However, it will be appreciated that in other examples, the drive vehicle 110 may be detachable from the sprayer implement 120.

The drive vehicle 110 is configured for facilitating control of a movement and/or direction of the agricultural vehicle system.

The drive vehicle 110 comprises a chassis 111, e.g., supported by wheels 112 or one or more tracks. The chassis 111 provides structural support to the drive vehicle.

The drive vehicle 110 may include an operator cab 113 mounted on the chassis 14. The operator cab may house controls for the agricultural vehicle system.

An engine (not visible in FIG. 1) may be mounted on a forward portion of the chassis in front of the operator cab or may be mounted on a rearward portion of the chassis behind the operator cab. The engine may, for example, comprise a diesel engine or a gasoline-powered internal combustion engine, a battery-powered electric motor, etc. The engine provides energy to propel the drive vehicle (and thereby the agricultural vehicle system) through an agricultural environment, such as a field, on the wheels or tracks, and may also provide energy to spray fluids (e.g., liquids, gases) from the spray nozzles.

The sprayer implement 120 comprises a support frame 121 and one or more booms 122, 123 supported on the support frame 121. Each boom 122, 123 carries or comprises one or more fluid application devices 128 (e.g., spray nozzles) for delivering or applying fluid to an external environment (e.g., a field or other agricultural environment). In use, the fluid application device(s) 128 of each boom 122, 123 is/are used to distribute fluid over a wide swath as the agricultural vehicle system 100 is driven through the field.

Each boom 122, 123 may comprise a supporting structure 124, 125 (e.g., formed from an upper supporting beam 124 and a lower supporting beam 125) upon which the one or more fluid application devices 128 are mounted.

The agricultural vehicle system 100 may also comprise a product tank 130, which may be mounted to the drive vehicle 110 and/or the sprayer implement 120. In the illustrated example, the product tank 130 is mounted to the chassis 111 of the drive vehicle 110. In other examples, such as those where the sprayer implement is detachable from the drive vehicle, the product tank is mounted to the support frame 121 of the sprayer implement 120.

The product tank 130 may store fluids (e.g., water, liquid fertilizer crop desiccants and/or chemicals) for application to the external environment via the fluid application device(s) 128.

It will be appreciated that the agricultural vehicle system 100 will comprise a delivery system (not visible in FIG. 1) for delivering fluid from the product tank 130 to the fluid application devices. The delivery system may, for instance, comprise any one or more from a selection of a group comprising: ducts, pipes, tubing, channels, pumping arrangements; valves and so on. Example delivery systems suitable for spraying apparatus are well known in the art.

It is common for a sprayer implement 120 to comprise, for each boom 122, 123 of the sprayer implement, one or more height control mechanisms for controlling a height of the respective boom. In this context, a height of a boom is defined by a vertical displacement of the boom with respect to a ground surface (or a surface of a canopy beneath the boom).

Example height control mechanisms are well known in the art, and may include one or more suitable actuators such as a hydraulic actuator, a pneumatic actuator or a mechanical linear actuator (such as a rack and pinion actuator or a chain drive). More generally, any suitable (high speed) linear actuator may be employed to function as a height control mechanism, i.e., the height control mechanism may comprise any (high-speed) linear actuator.

By way of example, each boom may be connected to the support frame via a track (not visible in FIG. 1). A height control mechanism for a respective boom may comprise an actuator for moving the boom (e.g., linearly) along the track to thereby adjust the relative height of the boom.

Accordingly, the agricultural vehicle system 100 will also comprise a control system for controlling the operation of each height control mechanism. In particular, a controller is configured to control the operation of each height control mechanism to control a height of the respective boom, e.g., responsive to feedback data.

A typical example of an existing control system comprises, for each boom, one or more height sensors configured to determine a height between the respective boom and a ground surface (or canopy of plant material). The control system uses the determined height of each boom as feedback data to maintain or regulate the height of each boom, e.g., to a desired height. This provides a closed-loop feedback mechanism.

The desired height for the boom may be manually defined by an operator, e.g., via a user interface in the operator cab. Such a user interface may be configured to allow the operator to specify a target height value or select from predefined height options.

In some examples, the desired height may be automatically determined based on factors such as the type of crop being sprayed, the growth stage of the crop, or the specific agricultural material being applied. The control system may access a database or lookup table that correlates these factors to recommended boom heights.

In yet another example, the desired height may be (e.g., fixedly) predetermined.

Typically, each height sensor is mounted to its respective boom and faced downward (i.e., toward the ground surface). Each height sensor may use any suitable distance determination technique to determine a distance to the ground surface or canopy of plant material, and thereby a height of the boom. Examples techniques include ultrasonic, laser, or radar-based techniques.

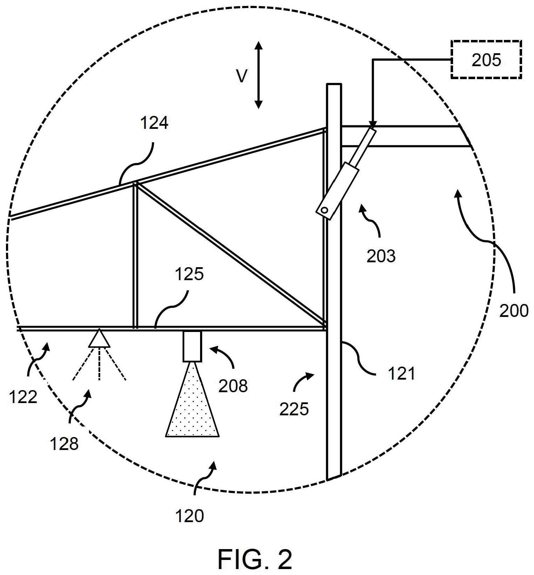

For the sake of contextual understanding, FIG. 2 schematically illustrates a portion of a sprayer implement 120 and a control system 200.

A boom 122 of the sprayer implement 120 is (e.g., moveably) mounted to a support frame 121 of the sprayer implement, e.g., via a track 225. A height control mechanism 203 is configured to controllably move the boom 122 along the track 205 to thereby adjust the height (i.e., vertical displacement) of the boom 122, e.g., along a vertical axis V.

In this way, each height control mechanism is configured to control a movement of the respective boom with respect to the support frame.

The operation of the height control mechanism 203, and thereby the height or vertical displacement of the boom, is controlled by a controller 205 (schematically illustrated). The controller 205 may, for instance, comprise a microprocessor-based device or system capable of executing programmed instructions to regulate the height control mechanism 203.

The controller 205 receives feedback data and controls the height of the boom respective to the feedback data. In existing or known examples, the feedback data comprises height data generated by one or more height sensors 208, which indicates a height or vertical displacement of the boom (e.g., between the respective boom and a ground surface (or canopy of plant material)). In particular, the controller 205 may be configured to control the height or vertical displacement of the boom (via control of the height control mechanism 203) to maintain or regulate the height of the boom to a desired height (e.g., input by a user or predefined).

The controller 205 may use various control algorithms, such as proportional-integral-derivative (PID) control, to maintain the boom at the desired height and/or to transition between different heights as needed or desired. Other suitable control algorithms or schemes may be used, such as those employed by non-linear switching controllers, multivariable controllers and so on.

By way of example only, where the height control mechanism 203 comprises a hydraulic mechanism, the controller may send electrical signals to one or more hydraulic valves to regulate the flow of hydraulic fluid to hydraulic actuators. By controlling the direction and amount of fluid flow, the controller is able to extend or retract the hydraulic actuators to adjust the boom height.

As another example, where the height control mechanism 203 comprises an electric motor-driven mechanism, the controller may send electrical signals to control the motor's speed and direction, allowing adjustment of the boom height through mechanical linkages or gears connected to the motor.

Other suitable approaches for controlling other forms of height control mechanism will be readily apparent to the skilled person.

The present disclosure provides a new form of feedback data for the controller of the height control mechanism.

In particular, a control system of a proposed agricultural vehicle system comprises one or more sensors for generating movement data. The movement data indicates a detected movement of the chassis (of the drive vehicle) in at least one detection direction. Each detection direction makes a non-zero angle with respect to a travel direction of the drive vehicle.

As will be well understood by the skilled person, a travel direction refers to the primary direction of forward motion of the agricultural vehicle system, which is typically aligned with the longitudinal axis of the drive vehicle. Thus, a travel direction of the drive vehicle may also represent or be a travel direction of the chassis (and vice versa).

The controller of the control system is configured to control, for each boom, the operation of the at least one height control mechanism to actively control a height of the respective boom with respect to the support frame responsive to the movement data.

In this way, the controller is able to anticipate and proactively adjust boom height to compensate for movements of the drive vehicle chassis, reducing the impact of terrain irregularities or obstacles on boom stability and spray application uniformity.

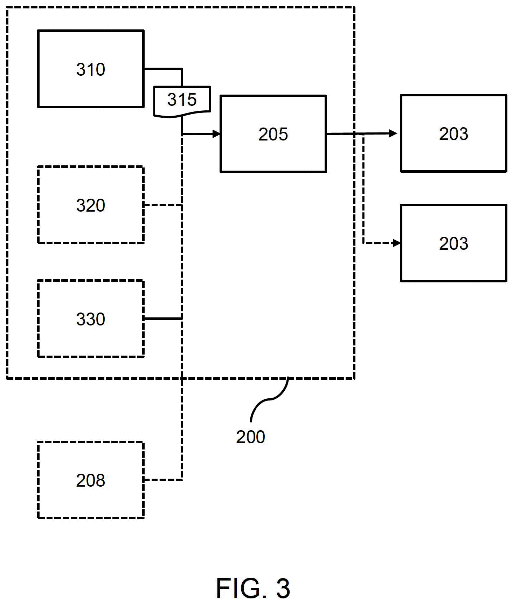

FIG. 3 schematically illustrates a control system 300 of a proposed agricultural vehicle system.

The control system 300 comprises one or more sensors 310 for generating movement data 315 indicating a detected movement of the chassis of the drive vehicle in at least one detection direction.

The one or more sensors may be positioned on the chassis. By mounting the sensors directly on the chassis, which serves as a structural component of the drive vehicle, the system is able to obtain precise and accurate movement data of the chassis.

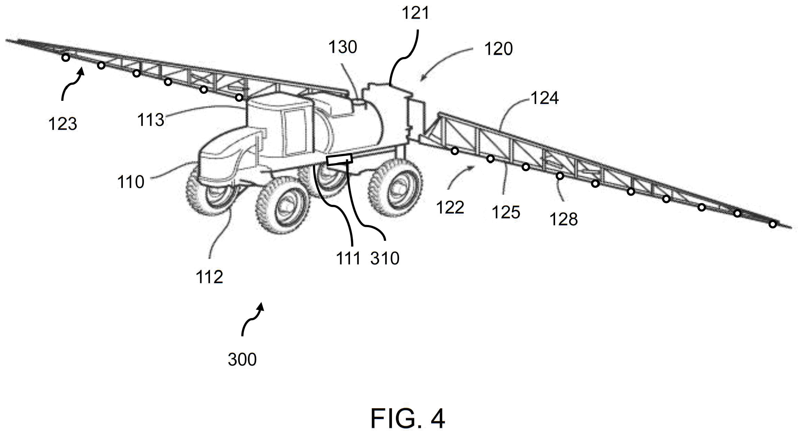

FIG. 4 illustrates a proposed agricultural vehicle system 300, which differs from the previously disclosed agricultural vehicle at least by the provision of one or more sensors 310 for generating the movement data. In this example, the sensor(s) 310 is mounted to the chassis 111.

Turning back to FIG. 3, the control system 300 also comprises a controller 205 configured to control, for each boom, the operation of the at least one height control mechanism 203 to actively control a height of the respective boom with respect to the support frame responsive to the movement data, e.g., to keep the boom(s) level.

In some examples, the controller is configured to control the operation of the at least one hydraulic mechanism to control a height of the boom, with respect to the support frame, to at least partially compensate for the detected movement of the drive vehicle indicated in the movement data, e.g., to keep the boom(s) level.

The precise operation of the controller 205 responsive to the movement data is dependent upon the content of the movement data.

For instance, where the movement data indicates vertical movement of the chassis, the controller may adjust the boom height in the opposite direction to a detected vertical movement of the chassis. For example, if an upward chassis movement is detected (e.g., due to a bump or obstacle), the controller may lower the boom to maintain a consistent height above the ground surface or plant material canopy.

As another example, the movement data may indicate a rotational movement of the chassis (e.g., a roll of the chassis). The controller may adjust the height of each boom to account for this rotational movement. For instance, in a scenario in which the agricultural vehicle comprises a pair of booms extending in opposite directions - for roll movements, the controller may raise one boom while lowering the other boom to maintain a (average) height of each boom above the ground surface or plant material and/or reduce a risk of a boom impacting the ground surface or plant material.

The controller may be configured to predict an anticipated movement of the boom by using the movement data to predict how chassis movements will propagate to the boom. In this way, the controller may calculate expected boom displacement and pre-emptively or actively counteract expected boom displacement with a controlled movement of the boom, e.g., to keep the boom level or substantially level. This may, for instance, be performed by modelling a known mechanical structure and/or linkage(s) between the chassis and the boom.

It will be appreciated that the compensation of the boom height (via the height control mechanisms(s)) may be proportional to the detected movement of the chassis, with larger chassis movements resulting in more significant boom adjustments.

In some examples, the controller may apply one or more filters or damping to the compensation to reduce a risk of over-correction or oscillation. This functions to smooth out the boom's response to high-frequency vibrations or noise in the movement data.

The one or more detection directions may include a vertical and/or lateral component relative to the drive vehicle's orientation. In this context, a vertical component is a component that is generally perpendicular to a plane in which the chassis lies or is positioned upon. A lateral component is parallel to the plane on which the chassis lies or is positioned upon, but generally perpendicular to a travel direction of the drive vehicle.

In particular, the one or more sensors may be configured to generate movement data comprising vertical movement data, indicating a movement of the chassis in a direction perpendicular to the plane on which the chassis lies or is positioned. This provides valuable information for indicating any potential bumps or obstacles that would affect a boom height and thereby would benefit from compensation.

In some examples, the movement data may comprise displacement data (e.g., vertical displacement data), indicating the change in position of the chassis (e.g., over time) in the one or more detection directions (e.g., in a vertical direction). Example sensors for generating displacement data include linear variable differential transformers and the like.

In some examples, the controller may directly use the displacement data to adjust boom height proportionally. For example, if the displacement data indicates the chassis has moved upward by 2 cm, the controller may lower the boom by a corresponding 2 cm to maintain a consistent spray height.

As another example, the controller may be configured to determine displacement trends over time to anticipate future boom movements. For instance, by examining the rate and direction of chassis displacement, the controller may predict upcoming terrain changes and preemptively adjust boom height to compensate.

In more complex examples, the controller may use the displacement data to build a terrain profile as the vehicle moves. This profile may be used to proactively adjust boom height before the boom reaches areas of uneven terrain previously traversed by the chassis.

The movement data may, for instance, comprise acceleration data indicating the rate of change of velocity of the chassis in the one or more detection directions. Example sensors capable of generating acceleration data include accelerometers, inertial measurement units (IMUs), and/or multi-axis motion sensors.

The controller may, for instance, integrate the acceleration data over time to derive velocity and displacement information for the chassis and predict how the boom will move in response to chassis movements. This can be used to compensate for a predicted movement of the boom by controlling the height control mechanism(s).

For example, if the acceleration data indicates a sudden upward acceleration of the chassis, the controller may predict that the boom will experience an upward displacement shortly thereafter. In response, the controller may preemptively lower the boom to counteract this anticipated upward movement. The magnitude of the boom adjustment may be proportional to the magnitude of the detected acceleration.

In some examples, the controller may use the acceleration data to estimate forces acting on the boom. By analyzing patterns in the acceleration data, the controller may identify recurring vibrations or oscillations in the chassis movement. The controller may then adjust the boom height in a way that dampens these vibrations, e.g., using adaptive filtering techniques.

In some examples, the movement data may include angular velocity data, representing the rotational speed of the chassis one or more axes. This information may be particularly useful for detecting roll or yaw movements of the drive vehicle. Examples of suitable detectors of angular velocity include: gyroscopes, rate sensors, and inertial measurement units (IMUs) that incorporate gyroscopic components. These sensors may measure rotational motion around one or more axes, providing data on the angular velocity of the chassis.

Angular velocity data may be used by the controller to detect and respond to rotational movements of the drive vehicle chassis. For example, if the angular velocity data indicates a roll movement (rotation around the longitudinal axis), the controller may be configured to adjust the height of each boom independently to maintain a consistent spray height across the entire width of the sprayer. In cases where the angular velocity data shows a pitch movement (rotation around the lateral axis), the controller may adjust both booms simultaneously to compensate for the forward or backward tilt of the vehicle.

The control system may further comprise one or more other sensors or sensing arrangements 320, 330 for generating other forms of feedback data for use in controlling the height of each boom. A number of example sensors and sensing arrangements are provided hereafter.

In some examples, the control system comprises one or more speed sensors 320 configured to generate speed data indicating a speed of the agricultural vehicle system, i.e., a vehicle speed. The controller may be configured to control the operation, for each boom, of the at least one height control mechanism further responsive to the speed data.

Example speed sensors are well known in the art, such as wheel speed sensors, GPS-based speed sensors, radar-based speed sensors and so on. The speed sensor(s) may, for instance, be already integrated into the drive vehicle, e.g., to function as a speedometer.

For instance, the timing of movement of the boom(s) using the controller may be dependent upon the speed data (i.e., vehicle speed). By way of simple example, for faster vehicle speeds, the controller may initiate boom movements earlier to ensure timely compensation for upcoming terrain changes or obstacles. Conversely, at slower speeds, the controller may delay boom adjustments, as there is more time available to react to detected chassis movements or anticipated terrain changes.

The controller may therefore be configured to perform predictive adjustment to the boom height using the movement data and the speed data to identify an appropriate timing for boom height adjustment. For example, if the vehicle is traveling at a high speed and the movement data indicates an upcoming bump (e.g., due to a vertical displacement of the chassis), the controller may initiate the compensatory boom movement sooner to ensure the adjustment is completed before the boom reaches the bump.

In some examples, the magnitude of boom adjustments may be scaled based on vehicle speed indicated in the speed data. At higher speeds, larger adjustments may be preferred to effectively compensate for terrain irregularities, while smaller, more gradual adjustments may be sufficient at lower speeds. This speed-dependent scaling may help maintain consistent spray coverage and boom stability across different operating conditions.

In some examples, the controller may be configured to process height data to establish a baseline height (e.g., to align with a desired height) for the boom control, from which the controller may then deviate based on the movement data.

As previously explained, the height data may be obtained from one or more height sensors 208 (FIG. 2), e.g., using an ultrasonic, laser, or radar-based measurement technique to determine the distance between the boom and the ground surface or plant material canopy.

By incorporating this height data, the controller may be configured to maintain a desired average boom height while simultaneously adjusting based on the detected chassis movements. For example, the controller may set an initial target height for the boom based on the height sensor readings. As the vehicle traverses the field, the controller may then make dynamic adjustments to this height in response to the movement data, effectively deviating from the baseline height to compensate for terrain irregularities or obstacles.

This approach provides a control strategy that combines the benefits of traditional height-based control with the proactive adjustments enabled by the chassis movement detection. The controller may continuously or iteratively update the baseline height based on the most recent height sensor readings, ensuring that the boom maintains an optimal average height even as it responds or reacts to short-term variations in chassis movement.

In some examples, the control system 200 further comprises a remote sensing system 330 configured to generate spatial data representing an environment ahead of the one or more booms of the sprayer implement.

The spatial data may be multi-dimensional data (e.g., 3D data) containing spatial information about the environment ahead of the one or more booms. The spatial data may thereby be indicative of information such as terrain contours, obstacles, or crop characteristics (e.g., canopy height). Suitable examples of spatial data include image data, 3D model data, point cloud data, mapping data; depth maps, and/or topographical maps.

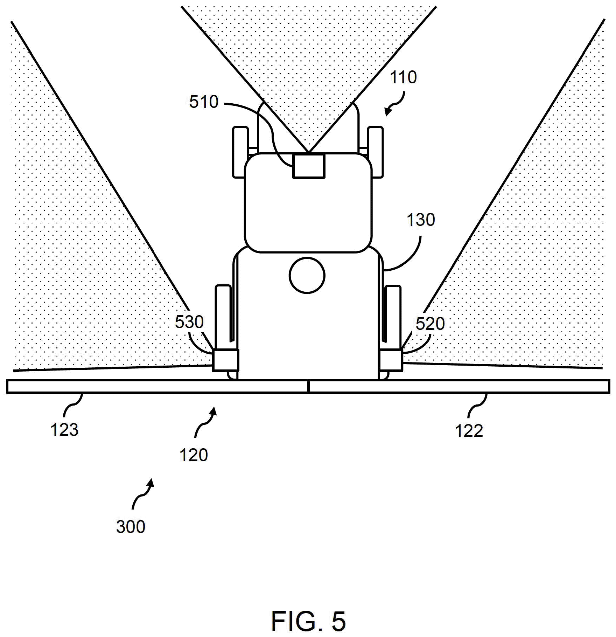

FIG. 5 conceptually illustrates an exemplary remote sensing system for an agricultural vehicle system 300.

The remote sensing system comprises one or more remote sensors 510, 520, 530 each configured to generate spatial data representing an environment ahead of the one or more booms of the sprayer implement.

Suitable examples of remote sensors are widely known to the skilled person, such as LIDAR sensors; radar sensors (e.g., imaging radar sensors); ultrasonic sensors; stereo camera systems; structured light 3D scanners; time-of-flight cameras and/or alternative sensing systems.

For instance, the remote sensing system may comprise a first remote sensor 510 configured to generate spatial data representing an environment ahead of the (overall) agricultural vehicle system. Thus, the first remote sensor may be mounted on the front or top of the drive vehicle to capture spatial data about the terrain and obstacles directly ahead of the vehicle.

In some examples, the remote sensing system may comprise a second remote sensor 520 configured to generate spatial data representing an environment ahead of a first boom 122 of the agricultural vehicle system. Thus, the second remote sensor 520 may be positioned to gather more localized spatial data specific to the area immediately ahead of the boom, e.g., to include a region at least between a front of the drive vehicle and the (first) boom 122.

In some examples, the remote sensing system may comprise a third remote sensor 530 configured to generate spatial data representing an environment ahead of a second boom 123 of the agricultural vehicle system, in an analogous manner to the second remote sensor 530.

In this way, the spatial data may contain information indicative of potential obstacles, debris, ground contours, changes in terrain, crop height variation and so on. In this way, the spatial data comprises useful information that indicates possible future causes of bumps or the like of the boom(s) of the agricultural vehicle system.

Turning back to FIG. 3, the controller 210 may be configured to control, for each boom, the operation of the at least one height control mechanism to actively control a height of the respective boom with respect to the support frame further responsive to the spatial data.

In particular, the controller may process the spatial data to identify potential changes in terrain height, obstacles, or other features that could impact boom height. By analyzing this information, the controller may anticipate upcoming terrain variations or obstacles that could affect the boom's position.

The controller may use this processed spatial data to perform predictive and active modification of the boom height. For example, if the spatial data indicates an approaching rise in terrain, the controller may time a raising of the boom to maintain a consistent height above the ground or crop canopy. Conversely, if a depression in the terrain is detected, the controller may similarly time a lowering of the boom.

This predictive adjustment based on spatial data may effectively allow the controller to function as an active suspension for the boom. By anticipating and proactively responding to terrain changes before or as the vehicle physically encounters them, the controller is able to smooth out the boom's motion, reducing sudden movements and potential stress on the boom structure.

More specifically, the controller may be configured to the controller of the control system is configured to: process the spatial data to predict a future movement of the sprayer implement in at least one implement movement direction; and control, for each boom, the operation of the at least one height control mechanism to actively compensate for at least part of the predicted future movement of the sprayer implement in the at least one implement movement direction.

The at least one implement movement direction may make a non-zero angle with respect to a travel direction of the drive vehicle, e.g., perpendicular to a plane in which the chassis of the drive vehicle lies . This appreciates that such angled movement are more indicative of terrain irregularities that will affect a height of the boom.

By way of example, the controller may be configured to perform object detection on the spatial data to predict the future movement of the sprayer implement. Object detection may comprise identifying and optionally classify specific features (i.e., obstacles) represented in the spatial data (i.e., in the environment ahead), such as rocks, ditches, or crop rows. The controller may be configured to analyze the detected objects to estimate their (potential) impact on the sprayer implement's movement. For instance, the size, shape, and location of detected obstacles may be used to predict how the sprayer implement will react when encountering them. The controller then calculate expected changes in the boom height based on the detected obstacle(s).

To predict future movement, the controller may use any suitable physics-based model that takes into account parameters of the sprayer implement (e.g., the sprayer implement's dimensions, weight distribution, and suspension characteristics). This model may be combined with the detected environmental features to simulate how the implement will respond to upcoming terrain changes.

This expected change in height may then be used to proactively adjust and/or time an adjustment of boom height, e.g., to maintain a substantially constant boom height or vertical displacement with respect to a ground surface or canopy height.

In some examples, the controller may be configured to perform contour detection on the spatial data to predict the future movement of the sprayer implement. Contour detection may comprise analyzing the spatial data to identify and topographical features ahead of the boom(s), such as hills, valleys, and slopes. By performing contour detection, the controller is able to create a detailed representation of the ground surface ahead of the sprayer implement. This information allows the controller to anticipate changes in elevation and terrain shape that the sprayer implement will encounter.

Moreover, using the contour information, the controller is able to predict how the sprayer implement will move as it traverses the detected terrain features. For example, if the contour detection identifies an upcoming hill, the controller can anticipate that the sprayer implement will need to climb this incline. Similarly, if a depression or dip in the terrain is detected, the controller can predict a downward movement of the sprayer implement.

By predicting these movements in advance, the controller may be configured to proactively adjust the boom height in response to the detected movement(s). For instance, if an upward slope is detected, the controller may gradually raise the boom height to maintain a consistent distance from the ground as the sprayer implement climbs the incline. Conversely, for a downward slope, the controller may lower the boom during the descent.

This contour-based prediction can be particularly useful for maintaining consistent boom height over undulating terrain, helping to ensure uniform application of agricultural materials and reducing the risk of boom damage from sudden terrain changes.

The controller may integrate this predictive capability with the movement data to create a more robust boom height control strategy. For instance, the controller may use the spatial data for longer-term anticipatory adjustments, while using the chassis movement data for more immediate corrections. This combined approach result in smoother boom height control.

The controller may be configured to predict movement of each boom individually and/or the overall sprayer implement.

For instance, the controller may process the spatial data to anticipate how each boom may respond separately to upcoming terrain features or obstacles. This individual boom prediction may account for factors such as the specific position of each boom relative to the vehicle, differences in boom length or weight distribution, and variations in terrain across the width of the sprayer implement.

Similarly, the controller may predict a movement of the overall sprayer implement (i.e., as a single unit) using the spatial data. This approach effectively determines how the entire implement, including all booms, will respond to terrain features or obstacles (e.g., features that will affect the whole system simultaneously.

Of course, a combination of both approaches may be employed. In particular, by combining both individual boom predictions and overall implement predictions, the controller is able to more comprehensively predict anticipated movements and adjust each boom's height accordingly.

The present disclosure recognizes that a movement of the agricultural vehicle system that results in a change in position, pitch, roll or yaw of the agricultural vehicle system will inherently cause strain or stress on any boom of the agricultural vehicle. Previously described techniques provide an approach to at least partially overcoming or reducing the impact of such changes on the boom, e.g., by performing active boom height control responsive to movement data and optionally spatial data.

In some examples, the effect of a steering of the drive vehicle on a yaw of the agricultural vehicle system (and therefore the boom(s)) is mitigated through the use of a multi-wheel steering technique.

In particular, the driving vehicle may comprise two or more sets of one or more wheels, where each wheel in a same set of one or more wheels lies in a same axis and each wheel in a different set of one or more wheels lies in a different axis.

The driving vehicle may further comprise a steering mechanism configured to steer a direction of each wheel of the two or more sets of one or more wheels; and during a first mode of operation and responsive to a steering instruction to perform a tracking movement, steer each wheel of the two or more sets of one or more wheels to have a same orientation to thereby substantially maintain a yaw of the agricultural vehicle system.

This steering mechanism thereby performs independent steering of multiple wheel sets to synchronize the orientation of all wheels during a tracking movement. By maintaining a consistent orientation across all wheels, the driving vehicle is able to reduce unwanted rotational forces on the agricultural vehicle system, helping to keep the entire agricultural vehicle system (including the sprayer implement and booms) aligned with the intended direction of travel. This functions to reduce a yaw movement of the boom(s), thereby reducing a torsional stress any boom structures. As well as helping to ensure that the boom-mounted fluid application devices remain appropriately oriented relative to the target application area.

This steering capability works in conjunction with the previously described active boom height control system. While the boom control system manages vertical adjustments, the synchronized steering helps maintain horizontal stability, creating a more complete approach to boom management, particularly in challenging environments.

The steering mechanism may switch between the first mode of operation and a second mode of operation. In the second mode of operation, the orientation of the wheel sets may differ to change an orientation of the driving vehicle.

In some examples, during the second mode of operation, the steering mechanism may adjust the orientation of each wheel set independently. For example, the front wheels may turn in one direction while the rear wheels turn in the opposite direction. This differential steering approach may enable the agricultural vehicle system to execute tighter turns, which may be particularly useful when navigating in confined spaces or at the end of crop rows.

The ability to switch between these two modes of operation may provide enhanced maneuverability and flexibility to the agricultural vehicle system. The first mode, with all wheels aligned, is preferred for travelling in a same general direction, e.g., where a straight-line travel is intended to maintain stability during spraying operations. The second mode, allowing for tighter turns, may facilitate more efficient navigation, e.g., when performing a headland turn.

The steering mechanism may be configured to determine in which mode to operate responsive to a speed of the agricultural vehicle system (e.g., as determined by the speed sensor(s) previously disclosed).

In particular, at higher speeds (e.g., speeds over a predetermined threshold), such as those that may occur during straight-line travel along crop rows, the steering mechanism may default to the first mode of operation where all wheels are aligned. This alignment helps maintain stability and reduces unwanted yaw movements, which is useful when spraying at higher speeds.

Conversely, at lower speeds (e.g., speeds below the predetermined threshold), the steering mechanism may switch to the second mode of operation. This recognizes that low speeds are usually indicative of a demand to change an orientation of the agricultural vehicle system, e.g., to perform a headland turn.

Proposed embodiments make use of a controller to implement the proposed control strategies described above. The controller is configured to processing data from one or more sensors (including at least movement data) and generate appropriate signals to control the operation of the height control mechanism(s).

The controller may be embodied using any suitable hardware configurations. For instance, the controller may comprise a microprocessor or microcontroller unit (MCU) with associated memory and input/output interfaces. The microprocessor may execute software instructions stored in memory to implement the control algorithms for regulating the height control mechanism.

In some implementations, the controller may include application-specific integrated circuits (ASICs) or field-programmable gate arrays (FPGAs) configured to perform the control functions. The controller may also comprise one or more sensor and/or communication interfaces. For example, it may include analog-to-digital converters (ADCs) to process data from the sensor(s), digital-to-analog converters (DACs) to generate control signals, and/or communication ports such as CAN bus or Ethernet to interface with other vehicle systems.

In some cases, the controller may be implemented as a distributed system, with multiple interconnected processing units working in coordination. This distributed architecture may allow for redundancy and parallel processing of control tasks.

Memory components of the controller may include volatile memory (e.g., RAM) for temporary data storage and non-volatile memory (e.g., flash memory or EEPROM) for storing firmware and configuration parameters.

It will be understood that disclosed methods are preferably computer-implemented methods. As such, there is also proposed the concept of a computer program comprising code means for implementing any described method when said program is run on a guidance control system, such as a computer. Thus, different portions, lines or blocks of code of a computer program according to an embodiment may be executed by a guidance control system or computer to perform any herein described method.

A computer program may be stored on a computer-readable medium, itself an embodiment of the disclosure. A "computer-readable medium" is any suitable mechanism or format that can store a program for later processing by a guidance control system. The computer readable medium can be, for example but not limited to, an electronic, magnetic, optical, electromagnetic, infrared, or semiconductor system, apparatus or device. The computer-readable medium is preferably non-transitory.

In some alternative implementations, the functions noted in the block diagram(s) or flow chart(s) may occur out of the order noted in the figures. For example, two blocks shown in succession may, in fact, be executed substantially concurrently, or the blocks may sometimes be executed in the reverse order, depending upon the functionality involved.

Variations to the disclosed embodiments can be understood and effected by those skilled in the art in practicing embodiments of the disclosure, from a study of the drawings, the disclosure and the appended claims. In the claims, the word "comprising" does not exclude other elements or acts, and the indefinite article "a" or "an" does not exclude a plurality. A single processor or other unit may fulfill the functions of several items recited in the claims. The mere fact that certain measures are recited in mutually different dependent claims does not indicate that a combination of these measures cannot be used to advantage. If a computer program is discussed above, it may be stored/distributed on a suitable medium, such as an optical storage medium or a solid-state medium supplied together with or as part of other hardware, but may also be distributed in other forms, such as via the Internet or other wired or wireless telecommunication systems. If the term "adapted to" is used in the claims or description, it is noted the term "adapted to" is intended to be equivalent to the term "configured to". If the term "arrangement" is used in the claims or description, it is noted the term "arrangement" is intended to be equivalent to the term "system", and vice versa. Any reference signs in the claims should not be construed as limiting the scope.

All references cited herein are incorporated herein in their entireties. If there is a conflict between definitions herein and in an incorporated reference, the definition herein shall control.

## Claims

1. An agricultural vehicle system comprising:
a drive vehicle having a chassis for providing structural support to the drive vehicle;
a sprayer implement configured to connect to the drive vehicle comprising:
a support frame;
one or more booms supported on the support frame, wherein each boom carries one or more fluid application devices; and
for each boom, at least one height control mechanism for controlling a height of the respective boom with respect to the support frame; and
a control system comprising:
one or more sensors for generating movement data indicating a detected movement of the chassis of the drive vehicle in at least one detection direction; and
a controller configured to control, for each boom, the operation of the at least one height control mechanism to actively control a height of the respective boom with respect to the support frame responsive to the movement data,
wherein each detection direction makes a non-zero angle with respect to a travel direction of the drive vehicle.

2. The agricultural vehicle system of claim 1, wherein the controller is configured to control, for each boom, the operation of the at least one height control mechanism to control a height of the respective boom, with respect to the support frame, to at least partially compensate for the detected movement of the chassis of the drive vehicle indicated in the movement data.

3. The agricultural vehicle system of claim 1 or 2, wherein each height control mechanism is configured to control a distance between the respective boom and the support frame.

4. The agricultural vehicle system of any one of claims 1 to 3, wherein each detection direction is perpendicular to a travel direction of the drive vehicle.

5. The agricultural vehicle system of any one of claims 1 to 4, wherein the at least one detection direction comprises a direction perpendicular to a plane in which the chassis of the drive vehicle lies.

6. The agricultural vehicle system of any one of claims 1 to 5, wherein the one or more booms comprises a plurality of booms.

7. The agricultural vehicle system of any one of claims 1 to 6, wherein each sensor of the control system comprises an accelerometer and/or inertia sensor.

8. The agricultural vehicle system of any one of claims 1 to 7, wherein:
the control system further comprises a remote sensing system configured to generate spatial data representing an environment ahead of the one or more booms of the sprayer implement; and
the controller of the control system is configured to control, for each boom, the operation of the at least one height control mechanism to actively control a height of the respective boom with respect to the support frame further responsive to the spatial data.

9. The agricultural vehicle system of claim 8, wherein the remote sensing system comprises a LIDAR sensor.

10. The agricultural vehicle system of claim 8 or 9, wherein the controller of the control system is configured to:
process the spatial data to predict a future movement of the sprayer implement in at least one implement movement direction; and
control, for each boom, the operation of the at least one height control mechanism to actively compensate for at least part of the predicted future movement of the sprayer implement in the at least one implement movement direction.

11. The agricultural vehicle of claim 10, wherein the at least one implement movement direction makes a non-zero angle with respect to a travel direction of the drive vehicle.

12. The agricultural vehicle system of any one of claims 8 to 11, wherein the controller of the control system is configured to:
process the spatial data to predict a future movement of each boom of the sprayer implement in at least one boom movement direction; and
control, for each boom, the operation of the at least one height control mechanism to actively compensate for at least part of the predicted future movement of each boom in the at least one boom movement direction.

13. The agricultural vehicle of any one of claims 1 to 12, wherein the one or more sensors are positioned on the chassis.

14. The agricultural vehicle system of any one of claims 1 to 13, wherein the drive vehicle comprises:
two or more sets of one or more wheels, where each wheel in a same set of one or more wheels lies in a same axis and each wheel in a different set of one or more wheels lies in a different axis;
a steering mechanism configured to:
steer a direction of each wheel of the two or more sets of one or more wheels; and
during a first mode of operation and responsive to a steering instruction to perform a tracking movement, steer each wheel of the two or more sets of one or more wheels to have a same orientation to thereby substantially maintain a yaw of the agricultural vehicle system.
